# EUROPEAN PATENT SPECIFICATION

(11) **EP 2 550 542 B1**
(45) Date of publication and mention of the grant of the patent: **19.10.2016**
(21) Application number: 11728932.2
(22) Date of filing: 23.03.2011
(51) Int. Cl.: G01S 1/76, G01S 1/82, G01S 5/18, G01S 11/14

(54) **ROBUST ULTRASONIC INDOOR POSITIONING SYSTEM WITH HIGH ACCURACY**
ROBUSTES ULTRASCHALL INNENRAUMPOSITIONIERUNGSSYSTEM MIT HOHER GENAUIGKEIT
SYSTÈME DE POSITIONNEMENT INTÉRIEUR ULTRASONIQUE ROBUSTE ET DE HAUTE PRÉCISION

(30) Priority: 23.03.2010 US 316521 P
(43) Date of publication of application: 30.01.2013
(73) Proprietor: University of Oslo, 0316 Oslo (NO)
(72) Inventor: HOLM, Sverre, N-1383 Asker (NO)
(74) Representative: Wilson, Timothy James
(86) International application number: PCT/IB2011/001091
(87) International publication number: WO 2011/117739

(56) References cited:
- EP-A1- 2 063 287
- WO-A1-2004/095056
- WO-A1-2006/013512
- WO-A2-2009/062956
- US-A1- 2002 167 417
- US-A1- 2003 156 495
- SVERRE HOLM ET AL: "Robust ultrasonic indoor positioning using transmitter arrays", INDOOR POSITIONING AND INDOOR NAVIGATION (IPIN), 2010 INTERNATIONAL CONFERENCE ON, IEEE, PISCATAWAY, NJ, USA, 15 September 2010 (2010-09-15), pages 1-5, XP031808813, ISBN: 978-1-4244-5862-2

## Description

### Field of the Invention

The present invention relates to ultrasound positioning systems, and in particular to ultrasound positioning systems that utilize at least one stationary array-based ultrasound transmitter in combination with portable receivers to provide a safe and robust positioning system.

### Background of the Invention

Ultrasound in a positioning system is usually associated with high accuracy in the cm-range, but a rather low range and often low robustness to external disturbances. Therefore, it is seldom used alone, but combined with other technologies. The largest family of hybrid systems is based on combination with RF. Several such systems have been described.

The Active Bat system [1] uses ultrasonic receivers in the ceiling. Each portable tag is polled over a 433 MHz radio channel and then emits an ultrasonic pulse which is used for a time-of-flight measurement. It requires finding the distance to a minimum of three reference nodes and then uses them to compute the position with an accuracy of a few cm. The Cricket system [2] has a similar accuracy, but the direction of ultrasound transmission is reversed. Its portable tags are ultrasound receivers that measure time-of-arrival based on the RF trigger pulse. The measurement is then returned over RF for computation of position. In the Dolphin system, each node has both ultrasound and RF receivers and transmitters. It also features a distributed algorithm to lower configuration costs. In [3] an accuracy of around 15 cm was reported.

All of these systems combine ultrasound and RF and are based on estimating time-of-flight based on the slow travel time of ultrasound compared to RF. A requirement of such systems is line of sight. This is their first disadvantage. In addition, there is another, often more serious shortcoming with ultrasound time-of-flight systems. In order to get accuracy, one must find time-of-flight within a few wavelengths (at 40 kHz the wavelength is 8.5 mm). Depending on the signal to noise ratio, such an estimator may require several kHz of bandwidth and this makes it very sensitive to the background noise. For this reason [4] indicates the failure to design purely acoustic trackers that do not 'go berserk' when keys are jingled. The analysis of the link budget in [5] shows why this is so. The best designed ultrasound systems may not be as bad as 'go berserk', but they will just stop working. A well-designed hybrid system may then fall back to the alternative technology for positioning. This goes in particular for inertial sensors, but potentially also RF. Also note that in principle one could have just increased the output power, but this would come in conflict with allowable exposure level of humans to ultrasound, see next section.

Thus, the systems based on ultrasound time-of-flight are fine for applications which require very high location accuracies, and where one can live with the short range and the dropouts. But for applications requiring larger ranges and high reliability, such as when positions are required for an entire building other approaches must be pursued.

It turns out that in many applications, it is not really required with accuracy in the cm range, but rather longer range and more robustness. Ultrasound shares the property with audible sound that normal rooms and offices are well isolated for it. Like speech in a closed room in a well-designed building, ultrasound cannot be detected outside of the room. This is a unique property of ultrasound that is not shared with RF.

This has given rise to ultrasound systems that are used for indoors positioning with room-level accuracy. This can also be called positioning by confinement. In the analysis of [5], it is shown that this makes the system much more robust as time-delay estimation is no longer needed. Instead one needs to establish communications and transfer a short message with identity information. This can be done in a bandwidth of a few tens of Hz rather than kHz. Hence the much larger tolerance to realistic background noise levels. Also, due to the reflecting properties of the walls, the floors, and the ceiling, line-of-sight is not required.

This first generation of ultrasound room-level accuracy indoors positioning systems used ultrasound transmitters which were portable (US 7,535,796, 19 May 2009, US patent 7,362,656, 22 April 2008, US patent 7,352,652, 1 April 2008, US patent 7,336,563, 16 Feb. 2008).

Such systems have proven to be useful in e.g. tracking of assets and of personnel. Still they have several shortcomings which limit their usage. First among them is a low update rate. This leads to a relatively large probability of missed items if several objects are to be located in a room within a short time frame.

One of the main differences from the ultrasound indoor positioning system of [6], [7] and our own US patents, is that the direction of flow of ultrasound is reversed, so the need for humans to wear an ultrasound transmitter is eliminated. This makes it possible to increase the distance between humans and the high-level ultrasound transmitter to several meters. Although there is no clear consensus on the value of ultrasound exposure limits, the proposed system is more in accordance with the ALARA (As Low as Reasonably Achievable) principle with respect to exposure.

There does not seem to be international consensus on safety of airborne ultrasound [8] and there are several guidelines regarding exposure levels such as [9], [10], and [11]. The latter forms the basis for the US Dept. of Labor, Occupational Safety & Health Adm. Document [12].

The 1984 [9] and the Canadian 1991 [10] recommendations give 110 dB SPL as the maximum level for occupational exposure in a 1/3 octave band centered on 40 kHz. In addition [9] allows for an increase if the occupational exposure is intermittent. If the exposure of a worker is as little as 1 hour or less per day, it allows an increase up to 119 dB SPL. This is not allowed in the Canadian limits, arguing that subjective effects can occur almost immediately. The most restrictive guideline is [9] in the case of public exposure, when the limit is lowered to 100 dB SPL.

On the other hand, the most liberal guideline is the US one [11] which allows for a level of 115 dB SPL. Interestingly, in recent years it has also allowed for an increase of 30 dB when there is no possibility that the ultrasound can couple with the body. The recommendations [9] and [10] only allow to exceed the levels in the previous paragraph if ear protection is worn by workers. But the 145 dB US limits are not generally accepted. As an example, the review of exposure limits in [13] states that the ACGIH may have pushed its acceptable exposure limits to the very edge of potentially injurious exposure in commenting on a 1998 version of [11] with the same limits.

It should also be noted that systems like Walrus [13] operating at near audio frequencies, fall under even stricter output level limits. Again, the US limits are the most lenient ones with the maximum level being 105 dB at 20 kHz [11] vs. 115 (possibly + 30) dB at 40 kHz. The occupational limit of [9], [10] has been reduced from 110 dB to 75 dB and the public limit of [9], is 70 dB rather than 100 dB. Thus in the worst case, the limits may be 30-35 dB lower at 20 kHz than at 40 kHz. The rough square-frequency dependency of attenuation in air will compensate for this to some extent. Still the range will easily be too restricted for guaranteed performance in a noisy environment.

WO 2004/095056 describes a system for estimating the position of an object in a room, in which a transmitted ultrasound pulse is reflected at least once and the reflection is received at an ultrasound receiver. The pulse may be emitted by an array of emitters so as to be strongly directional. The position of the object is then estimated from the time delay after which the reflection is received at the receiver, or by matching a signature of the received signal with measured or simulated templates for different object positions.

From one aspect the present invention provides a system for determining the location of a portable tag in a distinct zone, according to claim 1.

In some embodiments, the first array based ultrasound transmitter is configured to transmit ultrasound signals to five or more distinct sectors within the zone. In some embodiments, the first array based ultrasound transmitter is configured to transmit ultrasound signals to from five to 20 distinct sectors within the zone. In some embodiments, the first array based ultrasound transmitter is stationary.

In some embodiments, the systems further comprise at least a second array based ultrasound transmitter within the zone, the second array based ultrasound transmitter is configured to transmit ultrasound signals to two or more distinct sectors within the zone. In some embodiments, the second array based ultrasound transmitter is configured to transmit ultrasound signals to five or more distinct sectors within the zone. In some embodiments, the second array based ultrasound transmitter is configured to transmit ultrasound signals to from five to 20 distinct sectors within the zone. In some embodiments, the second array based ultrasound transmitter is stationary. In some embodiments, the second array based ultrasound transmitter is arranged to transmit ultrasound signals on an axis that is approximately perpendicular to the first array based ultrasound transmitter so that the first and second array based transmitters establish an x axis and a y axis.

In some embodiments, the distinct zone has a top portion and the array based ultrasound transmitter is positioned on the top portion of the distinct zone. In some embodiments, the array based ultrasound transmitter is a two-dimensional array based ultrasound transmitter. In some embodiments, the two-dimensional array based ultrasound transmitter is stationary.

In some embodiments, the systems further comprise a plurality of array based ultrasound transmitters in a plurality of distinct zones. In some embodiments, the array based ultrasound transmitter comprises a one dimensional array of ultrasound transmitters. In some embodiments, the array based ultrasound transmitter comprises a two dimensional array of ultrasound transmitters. In some embodiments, the distinct zone corresponds to a room in a building. In some embodiments, the array based ultrasound transmitter is configured to allow detection in a zone of less than about 1 m². In some embodiments, the portable tag is associated with a unique identification code and wherein is the unique identification code is transmittable by the radio frequency transmitter as part of a radio frequency signal. In some embodiments, the systems further comprise a plurality of portable tags, each of the portable tags associated with a unique identification code and wherein the unique identification code is transmittable by the radio frequency transmitter as part of a radio frequency signal.

In some embodiments, the present invention provides for the use of the foregoing systems to locate a portable tag. In some embodiments, the present invention provides for the use of the foregoing systems to locate objects. In some embodiments, the present invention provides for the use of the foregoing systems to locate persons.

In some embodiments, the present invention provides processes for locating a portable tag in a predetermined zone comprising: transmitting an ultrasound signal from at least one array based ultrasound transmitter in the discrete zone to at least one portable tag comprising an ultrasound receiver and a radio frequency transmitter; transmitting a radio frequency signal from the radio frequency transmitter to a radio frequency receiver; and, via a processor, determining the location of the portable tag in the discrete zone based on information transmitted from the radio frequency transmitter to a radio frequency receiver. In some embodiments, the information transmitted from the radio frequency transmitter to a radio frequency receiver comprises an identification code for the portable tag and the location of the portable tag within the predetermined zone.

In some embodiments, the present invention provides processes comprising providing a system as described above and utilizing the system to locate a portable tag, object, or person.

### Description of the Figures

Figure 1 is a diagram of a one dimensional array of the present invention with four elements.
Figure 2 is a depiction of an embodiment of the invention wherein one array based ultrasound transmitter is used to divide a zone into multiple sectors.
Figure 3 is a depiction of an embodiment of the invention wherein two array based ultrasound transmitters are used to divide a zone into multiple sectors.
Figure 4 is a diagram of a two dimensional array of the present invention with seven elements.
Figure 5 is a diagram of a two dimensional array of the present invention with twelve elements.
Figure 6 is a diagram of a one dimensional array with a horn in the vertical dimension.
Figure 7 is a depiction of an embodiment of the present invention where two transmitter arrays are used to determine two components of velocity.

### Detailed Description of the Invention

The present invention addresses how ultrasound (US) can be combined with radio frequency (RF) to overcome the drawbacks noted above using stationary ultrasound transmitters. This represents a new kind of hybrid system. The systems of the present invention do not have the low reliability of the hybrid systems based on time delay estimation and in contrast to active RFID-systems they will have room-level accuracy with 100% reliability in practice. The systems of the present invention also possess the high update rate and large capacity inherent in RF systems. In further preferred embodiments of the present invention, a portable ultrasound receiver which has the capability to measure signal level and Doppler shift, such as in the inventor's previous patent application ("Ultrasound zone location system with high capacity", PCT Application WO/2009/062956 ) is used in conjunction with steerable, narrow ultrasound beams, to achieve reliable positioning with accuracies much better than a room.

This invention differs from other ultrasound positioning systems in at least two ways: Robustness and Safety. With respect to robustness, almost all ultrasound positioning systems are based on some form of time delay estimation. This operation is very sensitive to noise and the experience is that they tend to break down in real-life environments. Therefore the goal of this work is to achieve maximal positioning accuracy without the use of time delay estimation. This means that other parameters such as signal strength and Doppler shift have to be utilized in an optimal way in order to achieve positioning. With respect to safety, in many systems where people carry ultrasound transmitters, there is a chance that levels may exceed recommended exposure limits. Therefore this invention is based on ultrasound receivers which are carried instead to ensure that transmitters are at a safe distance from people.

Co-pending application-PCT Application WO/2009/062956 describes systems for achieving position accuracy better than a room. The described systems used portable ultrasound receivers which detected data and measured amplitude (received signal strength indicator - RSSI) and Doppler shift which can be measured in the same small bandwidth and thus in a robust way. The US receiver is attached to items to be tracked and receives ID data over the ultrasound channel and finds ultrasound RSSI and Doppler shift. The high capacity is due to the existence of an RF channel which the tag uses for transmission of this data to the stationary receivers. In some embodiments of the present invention, these features are combined with a novel transmitter in order t o achieve accuracies at bed-level or down to about 1 x 1 m.

As described above, previously described systems may expose humans to unsuitable dB levels. Preferred embodiments of the system of the present invention, where the portable units only contain ultrasound receivers, expose humans to lower levels than a system with wearable transmitters. With the uncertainty regarding effects of ultrasound exposure, the systems of the present invention are therefore more in line with the ALARA (As Low as Reasonably Achievable) principle. In some embodiments, a minimum distance of 1 m from a transmitter to a person is utilized, thus the maximum exposure level is 110 dB SPL for the transmitter analyzed in [5]. This is equivalent to or less than the occupational limit of current guidelines. In some embodiments, a larger distance is utilized as the transmitters would typically be mounted in the ceiling of a distinct zone, such as a room. If the minimum distance is 3 m, the maximum exposure will be 20log(1/3) or about 10 dB lower, i.e. 100 dB SPL, which is the public exposure limit of [9]. This is the most conservative value of all the recommendations, and a value at which it is believed that the public may be exposed continuously. In smaller rooms, the output level may also be further reduced, making it possible to guarantee exposure levels below 100 dB SPL even at smaller distances than 3 m.

The systems of the present invention preferably have the following characteristics of robustness. In some embodiments, the communication systems of the present invention preferably work in all kinds of background noise and room reverberations. Positioning systems based on time delay estimation tend to break down in real-life environments. In some embodiments, the systems of the present invention provide maximal positioning accuracy without time delay estimation. A second characteristic is safety. In some systems where people carry ultrasound transmitters, there is a chance that levels may exceed recommended exposure limits. In some embodiments of the present invention, receivers are carried, ensuring that transmitters are at a safe distance from people.

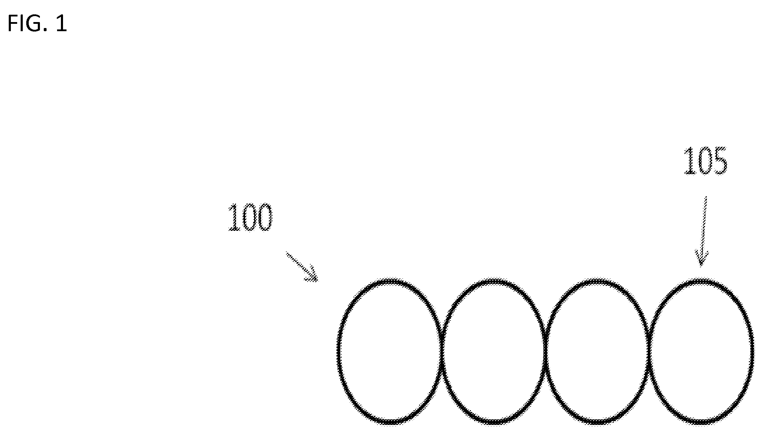

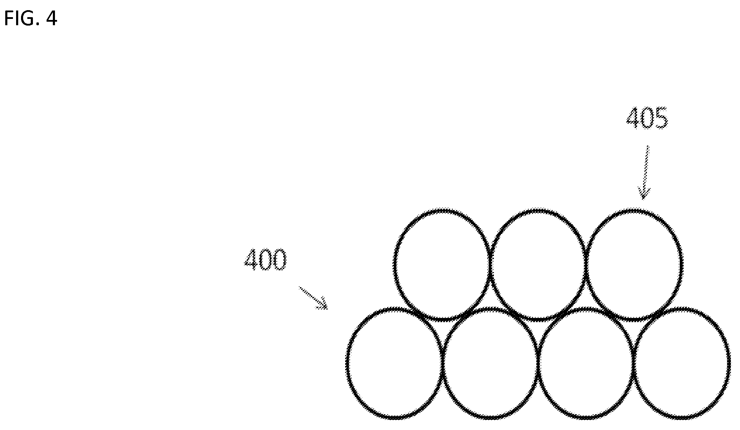

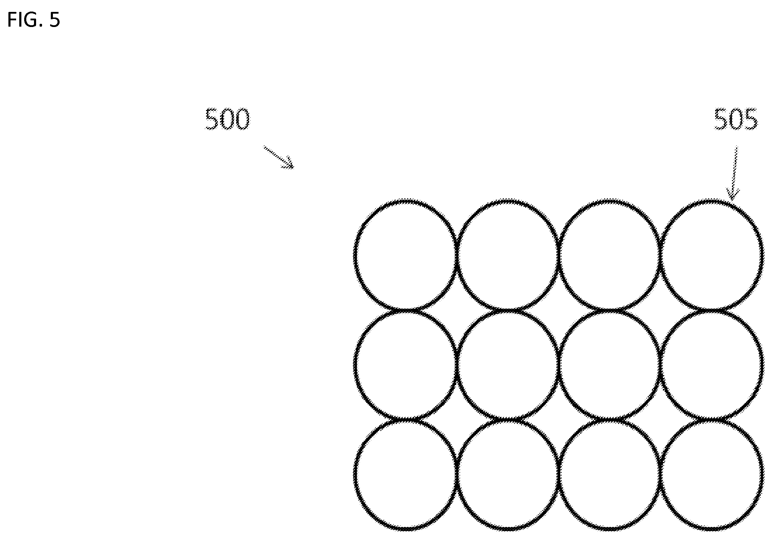

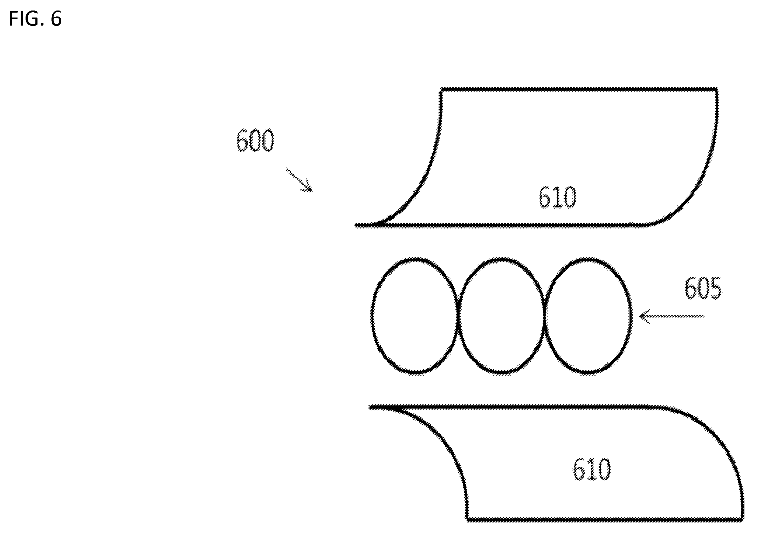

In some preferred embodiments, the systems of the present invention comprise one or more stationary array-based ultrasound transmitters per distinct zone, such as a room. The array can be either 1-dimensional or 2-dimensional. The 1-d array is usually oriented in the horizontal plane and can consist of as few as only 2 elements. It is well known that such an array will in each dimension have an approximate angle of illumination given by lambda/D (radians), where lambda is the wavelength of the ultrasound and D is the aperture (i.e., the extent from one end of the array to the other). The present invention is not limited to the use of any particular array based ultrasound transmitter. As non-limiting examples, **Figures 1**, **4**, **5**, and **6** depict different types of array based ultrasound transmitters. **Figure 1** depicts a 1-D array **100** of the present invention with 4 elements **105**. **Figure 4** depicts a two dimensional array **400** of the present invention with seven elements **405**. **Figure 5** depicts a two dimensional array **500** of the present invention with twelve elements **505**. **Figure 6** depicts a one dimensional array **600** of three elements with a horn **610** (in cross section) in the vertical dimension. All of these configurations require the steering of beams from an array of elements. This is accomplished as is known in the art by relative delays between the transmit signals of each element in the array. This is standard practice in sonar and radar array systems.

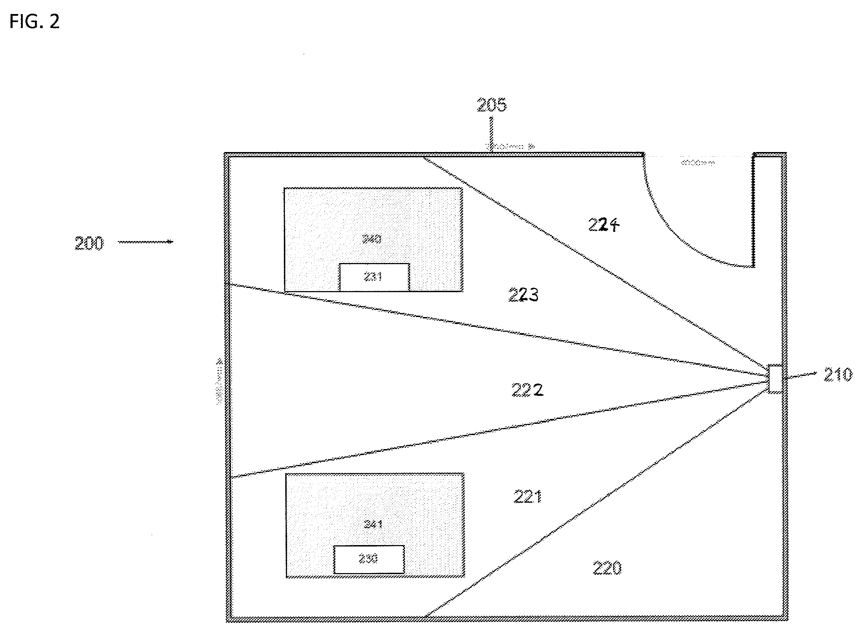

The array based ultrasound transmitter is configured to transmit data and to steer its beam in the array plane. In this way, multiple sectors are formed which are about lambda /D radians wide. **Figure 2** provides a schematic diagram of a system of the present invention **200** deployed in a distinct zone **205** in which an array based ultrasound transmitter **210** is positioned. As an example, the array based ultrasound transmitter **210** in **Figure 2** is configured to illuminate, or direct ultrasound waves, into five distinct sectors, **220**, **221**, **222**, **223**, and **224**, denoted by the dashed lines. In some embodiments, the array based ultrasound transmitter **210** first sends its data into sector **220**, then sector **211**, and so on, and may repeat this pattern continuously. In other embodiments, the array based ultrasound transmitter sends 1 beam per sector, pauses and then repeats the transmission in each sector. In some embodiments, the transmitted data may consist of a room identification code (optional) and sector identification codes. In some embodiments, the array scans over the room which it illuminates and for each sector it changes the sector ID information.

Still referring to **Figure 2**, in some embodiments the systems further comprise one or more portable tags **230** and **231.** In an exemplary embodiment, the portable tags **230** and **241** would be associated with a patient (not shown) on a bed **240** and **241.** In some embodiments, the portable tag (e.g., **230** and **231**) comprises a radio frequency transmitter that transmits a radio frequency signal and an ultrasound receiver configured to communicate with the first array based ultrasound transmitter. In further preferred embodiments, the portable tag is associated with a unique identification code which is transmittable by the radio frequency transmitter as part of a radio frequency signal. In an exemplary embodiment, a single one dimensional array such as depicted in **Figure 1** is used to illuminate various sectors as depicted in **Figure 2****.** The ultrasound receiver of the portable tag (e.g., **230** and **231**) receives the sector identification code and determines signal strength. In the simplest case, the portable tag will only receive data when it is in the illuminated sector. In this way, the sector where the portable tag is located can be determined. In other cases, the ultrasound receiver of the portable tag will also receive data when other sectors are illuminated. In this instance, the RSSI is used to determine the strongest sector data is received in and in this way determine the sector in which the portable tag is located. In some embodiments, the portable tag further comprises a radio receiver. The radio receiver can be utilized to program the portable tag, cause activation of lights or other signaling devices on the portable tag, to activate or "wake-up" the portable tag as necessary, and other wise communicate with a central processor (not shown).

In some preferred embodiments, the array based ultrasound transmitter **210** and portable tags **230** and **231** are in communication with a processor (not shown). For example, in some embodiments, the processor is associated with a radio receiver and the portable tag and/or array based ultrasound transmitter communicate with the processor via wireless radio frequency connections. The processor processes the data received from the array based ultrasound transmitter and/or portable tag (e.g., one or more of the room, sector and portable tag identification codes) to determine the location of the portable tag within a zone and/or sector. The processor preferably has a user interface allowing users to access location data, either using a graphic output providing an overview of all zones or a selection of some of all zones, and/or by means of receiving a user input in the form of a request for location of a specific person or object, to which the processor may respond either with a text output and/or audible output. The processor may, in larger systems, be connected to a network such as an internal computer network of a company, so as to allow users of the network to access zone location information, either for tracking persons or objects. In this way, the systems of the present invention achieve an accuracy which is suitable for determination of for instance which bed a patient is located in, in a multi-bed hospital room (see **Figure 2**).

It will be understood that the embodiment depicted in Figure 2 may be expanded to include a plurality of distinct zones, each associated with an array based ultrasound transmitter. Likewise, different configurations of array based ultrasound transmitters may be used to create a plurality of sectors in a plurality of distinct zones, for example 2, 3, 4, 5, 6, 7, 8, 9, 10 or from 50 to 50, 5 to 40, 5 to 30, 5 to 20, or 5 to 15 sectors.

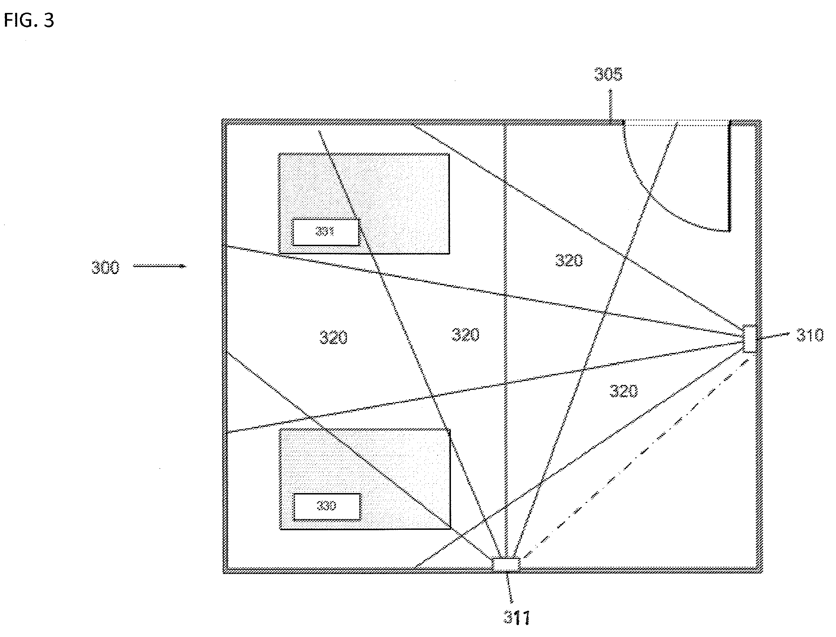

In further preferred embodiments, the systems of the present invention utilize two or more array based ultrasound transmitters per distinct zone. It is contemplated that greater accuracy is provide by systems utilizing two array based ultrasound transmitters (e.g., one-dimensional array based ultrasound transmitters). In some embodiments, the array based ultrasound transmitters are positioned at different locations within a distinct zone so that the beams transmitted by the array based ultrasound transmitters intersect each other at an angle. As an example, the array based ultrasound transmitters may be placed on perpendicular walls. In some embodiments, the array based ultrasound transmitters transmit their information over each sector in sequence, first the first transmitter covers its sectors and then the second array scans over its sectors and so on. In this way intersecting sections may be determined and a greater accuracy may be achieved. In some embodiments, target accuracies down to say 1x1 m are achieved. One such embodiment is depicted in **Figure 3. Figure 3** provides a schematic diagram of a system of the present invention **300** deployed in a distinct zone **305** in which two one-dimensional array based ultrasound transmitters **310** and **311** are positioned. The array based ultrasound transmitters **310** and **311** are configured to illuminate, or direct ultrasound waves, into multiple distinct sectors, **320**, denoted by the dashed lines. In some embodiments, the transmitted data may consist of a room identification code (optional) and sector identification codes. In some embodiments, the array scans over the room which it illuminates and for each sector it changes the sector ID information. The systems further comprise the components described above in reference to **Figure 2**, including portable tags **330** and **331**, a processor, and radio frequency signal receivers and transmitters.

In other preferred embodiments, an alternative way to increase accuracy of location detection is utilized. In these embodiments, an array based ultrasound transmitter is positioned on the top of a distinct zone, for example the ceiling of a room. In some embodiments, the array based ultrasound transmitter is a 2D array (e.g., as depicted in **Figure 5**). This placement is advantageous as information is normally desired with respect to position in the x,y-plane and height over the floor is not so interesting (z). A ceiling mounted array may thus achieve the same accuracy as the configuration described above that utilized two 1-D arrays.

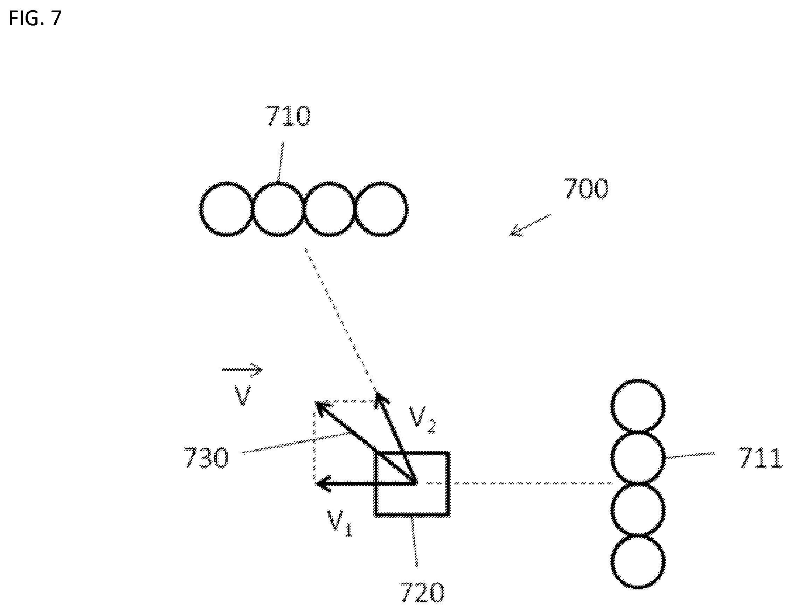

In some embodiments, the ultrasound receiver in the portable tag has a Doppler shift measurement capability. In these embodiments, this capability may be used to find the velocity component along the ultrasound beam, that is along the vector between the receiver and the ultrasound transmitter. A 1D array will give just the velocity component along this direction. However, the use of two 1D arrays, in for instance the perpendicular wall configuration outlined above, will give velocity components in two directions. This data is enough for determination of both the velocity and its direction, i.e. the full velocity vector in two dimensions, as depicted in the schematic diagram in **Figure 7****.** Referring to **Figure 7**, such a system **700** comprises, for example, two 1D arrayed based ultrasound transmitters **710** and **711**, a portable tag **720**, as well as the other components described above (e.g., processor, radio frequency receiver, etc.). The arrows **730** denote the motion vectors. In some embodiments, the addition of a third transmitter, in for example the ceiling, allows the determination of the full 3D velocity vector. Only having a ceiling mounted array is not advantageous for Doppler as the main movement of interest is usually in the x,y-direction, i.e. perpendicular to the beams from a ceiling-mounted array, so it is anticipated that little Dopplershift is detected for a ceiling-mounted array.

A competing technology is based on accelerometers, but that technology requires that the tag's orientation be fixed or be known in order to achieve a comparable result. It is often difficult to control or find for a portable tag. In practice it may vary all the time. The orientation can in principle be found through the use of a built-in compass, but as they are seldom very accurate near metal structures, their accuracies are often not very good indoors.

In some embodiments, more array based ultrasound transmitters, whether they are wall- or ceiling-mounted, may be added to the systems of the present invention in particular cases where the room is large or the geometry of the room is particularly challenging with for instance partial obstruction of the beams by furniture or other cubicle divisions and a reflected signal may reach the receiver with a stronger amplitude than the direct signal. In some embodiments, additional arrays are added more for redundancy and a method for excluding the data received from the array which deviates most from the others is then used in the processing in the base station.

In some embodiments, it may be desirable to limit the extent of the ultrasound beam, in particular in the vertical plane in order to avoid reflections in the ceiling or floor which may make RSSI and Doppler measurements ambiguous. In some embodiments, the array based ultrasound transmitter may be extended from 1D to 2D, also having elements in the vertical dimension. In this way sectors may be formed in the vertical direction also, in order to avoid the problem of reflections from the ceiling and floor. **Figure 4** provides a depiction of a suitable two-dimensional array based ultrasound transmitter with seven elements. It is understood that many other configurations are possible with in general N elements in the horizontal axis and M elements in the vertical axis, see, for example, **Figure 5** where N=4 and N=3. In other embodiments, a horn in the vertical dimension, is utilized to limit the spreading of the beam in the vertical plane, for example as depicted in **Figure 6****.**

In some embodiments, further refinement of the angular accuracy of the RSSI-based positioning is achieved by sending out beams that overlap in angle. In these embodiments, several measurements are made of amplitude in beams at slightly different angles. In further preferred embodiments, interpolation is used to find the angle with an accuracy which is better than the spacing between beams. A limitation to this method is that the addition of more beams will require more time in order to cover the desired sector. The interpolation method allows for trading time for acquisition of position vs. location accuracy.

### References

[1] A. Ward, A. Jones, A. Hopper, "A New Location Technique for the Active Office," IEEE Personal Communications, Vol. 4, No. 5, October 1997, pp. 42-47.
[2] N. B. Priyantha, A. Chakraborty, H. Balakrishnan, "The Cricket Location-Support system," Proc. 6th ACM MOBICOM, Boston, MA,
[3] Y. Fukuju, M. Minami, H. Morikawa, T. Aoyama, "DOLPHIN: An Autonomous Indoor Positioning System in Ubiquitous Computing Environment," in Proc. I EEE Workshop on Software Technologies for Future Embedded Systems, Japan, pp. 53-56, May 2003.
[4] G. Welch, E. Foxlin, "Motion Tracking: No Silver Bullet, but a Respectable Arsenal," IEEE Computer Graphics and Applications, Nov/Dec 2002, Vol. 22, No. 6, pp. 24-38.
[5] S. Holm, "Hybrid ultrasound-RFID indoor positioning: Combining the best of both worlds," IEEE Int. Conf. RFID, Orlando, FL, April 27-28, 2009.
[6] Holm, O.B. Hovind, S. Rostad, R. Holm, "Indoors data communications using airborne ultrasound," in Proc. IEEE Int. Conf. Acoust., Speech, Sign. Proc. 2005, Philadelphia, PA, March 2005.
[7] S. Holm, "Airborne Ultrasound Data Communications: The Core of an Indoor Positioning System," in Proc IEEE Ultrasonics Symposium, Rotterdam, Netherlands, Sep. 2005.
[8] F. A. Duck, "Medical and non-medical protection standards for ultrasound and infrasound," Progress in Biophys, Molecul. Biol., Effects of ultrasound and infrasound relevant to human health, Jan.-Apr. 2007, pp. 176-191.
[9] International Non-Ionizing Radiation Committee of the International Radiation Protection Association, "Interim guidelines on limits of human exposure to airborne ultrasound," Health Physics, Vol. 46, No. 4, pp 969-974, April 1984 (see www.icnirp.de).
[10] Environmental Health Directorate of Canada, Guidelines for the safe use of ultrasound: part II - industrial and commercial applications. Safety Code 24, 1991
[11] American Conference of Governmental Industrial Hygienists (ACGIH), Threshold Limit Values for Chemical Substances and Physical Agents & Biological Exposure Indices, 2003.
[12] US Dept. of Labor, Occupational Safety & Health Adm. Document, http://www.osha.gov/dts/osta/otm/noise/health_effects/ultrasonics.html, accessed Nov. 28, 2008.
[13] G Borriello, A Liu, T. Offer, C. Palistrant, R. Sharp, "WALRUS: wireless acoustic location with room-level resolution using ultrasound," Int. Conf. Mobile Systems, Appl. & Services, Seattle, WA, pp 191-203, 2005.

Various modifications and variations of the described method and system of the invention will be apparent to those skilled in the art without departing from the scope of the following claims.

## Claims

1. A system for determining the location of a portable tag (230, 231; 330, 331) in a distinct zone (205; 305) comprising:
at least a first array based ultrasound transmitter (210; 310), wherein said array based ultrasound transmitter is configured to steer a beam in an array plane and to transmit data to two or more distinct sectors (220 - 224; 320) within said zone (205; 305), wherein the data transmitted to each sector consists of a sector identification code;
a portable tag (230, 231; 330, 331) comprising (i) a radio frequency transmitter configured to transmit a radio frequency signal and (ii) an ultrasound receiver configured to receive a sector identification code from said first array based ultrasound transmitter and to determine a received signal strength;
a radio frequency receiver configured to communicate with the radio frequency transmitter via said radio frequency signal; and
a processor in communication with the first array based ultrasound transmitter and the radio frequency receiver, wherein the processor is configured to determine the location of the portable tag within said two or more distinct sectors based on information transmitted from the radio frequency transmitter on the portable tag via said radio frequency signal to the radio frequency receiver, wherein the system is configured to use the received signal strength to determine the strongest sector data is received in, and thereby determine the sector in which the portable tag is located.

2. The system of Claim 1, wherein said first array based ultrasound transmitter (210; 310) is configured to transmit ultrasound signals to five or more distinct sectors (220 - 224; 320) within said zone (205; 305).

3. The system of Claim 1, further comprising at least a second array based ultrasound transmitter (311) within said zone (305), said second array based ultrasound transmitter being configured to transmit ultrasound signals to two or more distinct sectors (320) within said zone.

4. The system of Claim 3, wherein said second array based ultrasound transmitter (311) is configured to transmit ultrasound signals to five or more distinct sectors (320) within said zone (305).

5. The system of Claim 3 or 4, wherein the array based ultrasound transmitters (310, 311) are positioned at different locations within said zone (305) so that the beams transmitted by the array based ultrasound transmitters intersect each other at an angle.

6. The system of any of Claims 3 to 5, wherein said second array based ultrasound transmitter (311) is arranged to transmit ultrasound signals on an axis that is approximately perpendicular to said first array based ultrasound transmitter (310) so that said first and second array based transmitters establish an x axis and a y axis.

7. The system of Claim 1, wherein said distinct zone (205; 305) has a top portion and said array based ultrasound transmitter (210; 310) is positioned on said top portion of said distinct zone.

8. The system of any of Claims 1 to 7, wherein the system is configured to determine the location of the portable tag (230, 231; 330, 331) without the use of time delay estimation.

9. The system of any of Claims 1 to 8, comprising means for steering ultrasound beams from at least the first array based ultrasound transmitter (210; 310) by relative delays between the transmit signals of each element (105; 405; 505) in the array.

10. The system of any of Claims 1 to 9, wherein at least the first array based ultrasound transmitter (210; 310) comprises a two dimensional array of ultrasound transmitters.

11. The system of any of Claims 1 to 10, wherein said distinct zone (205; 305) corresponds to a room in a building.

12. The system of any of Claims 1 to 11, wherein at least said first array based ultrasound transmitter (210; 310) is configured to allow detection in a zone (205; 305) of less than about 1 m².

13. The system of any of Claims 1 to 12, wherein the first array based ultrasound transmitter (210; 310) is configured to send out ultrasound beams that overlap in angle, and wherein the system is configured to make several measurements of amplitude in beams at slightly different angles and to use interpolation to determine the angle with an accuracy that is better than the spacing between the beams.

14. The system of any of Claims 1 to 13, further comprising a plurality of portable tags (230, 231; 330, 331), each of said portable tags associated with a unique identification code and wherein said unique identification code is transmittable by a respective radio frequency transmitter of each portable tag as part of a radio frequency signal.

15. Use of system of any of Claims 1 to 14 to locate a portable tag (230, 231; 330, 331), object (240, 241) or person.

## Patentansprüche

1. Ein System zum Bestimmen des Standortes von einer tragbaren Markierung (230, 231; 330, 331) in einem klar definierten Bereich (205; 305), umfassend:
wenigstens ein erster Array-basierter Ultraschallsender (210; 310), wobei der besagte Array-basierte Ultraschallsender dazu konfiguriert ist, einen Strahl in eine Array-Ebene zu lenken und Daten an zwei oder mehr klar definierte Abschnitte (220 - 224; 320) innerhalb des besagten Bereichs (205; 305) zu übertragen, wobei die an jeden Bereich übertragenen Daten aus einem Abschnitt-Identifizierungscode bestehen;
eine tragbare Markierung (230, 231; 330, 331) umfassend (i) einen Hochfrequenzsender, der dazu konfiguriert ist, ein Hochfrequenzsignal zu übertragen, und (ii) einen Ultraschallempfänger, der dazu konfiguriert ist, einen Abschnitt-Identifizierungscode von dem besagten ersten Array-basierten Ultraschallsender zu empfangen und eine empfangene Signalstärke zu bestimmen;
einen Hochfrequenzempfänger, der dazu konfiguriert ist, mit dem Hochfrequenzsender über das besagte Hochfrequenzsignal zu kommunizieren; und
einen Prozessor, der mit dem ersten Array-basierten Ultraschallsender und dem Hochfrequenzempfänger kommuniziert, wobei der Prozessor dazu konfiguriert ist, den Standort von der tragbaren Markierung innerhalb der besagten zwei oder mehr klar definierten Abschnitte basierend auf Informationen zu bestimmen, die von dem Hochfrequenzsender auf der tragbaren Markierung über das besagte Hochfrequenzsignal an den Hochfrequenzempfänger übertragen werden, wobei das System dazu konfiguriert ist, die empfangene Signalstärke zu verwenden, um zu bestimmen, dass die stärksten Abschnittsdaten empfangen wurden, und dadurch den Abschnitt zu bestimmen, in dem sich die tragbare Markierung befindet.

2. Das System nach Anspruch 1, wobei der besagte erste Array-basierte Ultraschallsender (210; 310) dazu konfiguriert ist, Ultraschallsignale an fünf oder mehr klar definierte Abschnitte (220 - 224; 320) innerhalb des besagten Bereiches (205; 305) zu übertragen.

3. Das System nach Anspruch 1, weiter umfassend wenigstens einen zweiten Array-basierten Ultraschallsender (311) innerhalb des besagten Bereiches (305), wobei der besagte zweite Array-basierte Ultraschallsender dazu konfiguriert ist, Ultraschallsignale an zwei oder mehr klar definierte Abschnitte (320) innerhalb des besagten Bereiches zu übertragen.

4. Das System nach Anspruch 3, wobei der besagte zweite Array-basierte Ultraschallsender (311) dazu konfiguriert ist, Ultraschallsignale an fünf oder mehr klar definierte Abschnitte (320) innerhalb des besagten Bereiches (305) zu übertragen.

5. Das System nach Anspruch 3 oder 4, wobei sich die Array-basierten Ultraschallsender (310, 311) an verschiedenen Standorten innerhalb des besagten Bereiches (305) befinden, so dass sich die von den Array-basierten Ultraschallsendern übertragenen Strahlen gegenseitig in einem Winkel schneiden.

6. Das System nach einem der Ansprüche 3 bis 5, wobei der besagte zweite Array-basierte Ultraschallsender (311) dazu eingerichtet ist, Ultraschallsignale auf einer Achse zu übertragen, die in etwa senkrecht zu dem besagten ersten Array-basierten Ultraschallsender (310) ist, so dass die besagten ersten und zweiten Array-basierten Sender eine X-Achse und eine Y-Achse bilden.

7. Das System nach Anspruch 1, wobei der besagte klar definierte Bereich (205; 305) einen oberen Teil hat und der besagte Array-basierte Ultraschallsender (210; 310) in dem besagten oberen Teil von dem besagten klar definierten Bereich positioniert ist.

8. Das System nach einem der Ansprüche 1 bis 7, wobei das System dazu konfiguriert ist, den Standort von der tragbaren Markierung (230, 231; 330, 331) ohne die Verwendung von Zeitverzögerungsabschätzung zu bestimmen.

9. Das System nach einem der Ansprüche 1 bis 8, umfassend Mittel zum Lenken von Ultraschallstrahlen von wenigstens dem ersten Array-basierten Ultraschallsender (210; 310) durch relative Verzögerungen zwischen den übertragenen Signalen von jedem Element (105; 405; 505) in dem Array.

10. Das System nach einem der Ansprüche 1 bis 9, wobei wenigstens der erste Array-basierte Ultraschallsender (210; 310) ein zweidimensionales Array von Ultraschallsendern umfasst.

11. Das System nach einem der Ansprüche 1 bis 10, wobei der besagte klar definierte Bereich (205; 305) einem Raum in einem Gebäude entspricht.

12. Das System nach einem der Ansprüche 1 bis 11, wobei wenigstens der besagte erste Array-basierte Ultraschallsender (210; 310) dazu konfiguriert ist, eine Erfassung in einem Bereich (205; 305) von weniger als etwa 1 m² zu ermöglichen.

13. Das System nach einem der Ansprüche 1 bis 12, wobei der erste Array-basierte Ultraschallsender (210; 310) dazu konfiguriert ist, Ultraschallstrahlen auszusenden, die sich in einem Winkel überlappen, und wobei das System dazu konfiguriert ist, mehrere Amplitudenmessungen in Strahlen bei geringfügig unterschiedlichen Winkeln zu machen und eine Interpolation dazu zu verwenden, den Winkel mit einer Genauigkeit zu bestimmen, die besser als der Abstand zwischen den Strahlen ist.

14. Das System nach einem der Ansprüche 1 bis 13, weiter umfassend eine Vielzahl von tragbaren Markierungen (230, 231; 330, 331), wobei jede von den besagten tragbaren Markierungen mit einem eindeutigen Identifizierungscode verknüpft ist und wobei der besagte eindeutige Identifizierungscode als Teil von einem Hochfrequenzsignal über einen entsprechenden Hochfrequenzsender von jeder tragbaren Markierung übertragbar ist.

15. Verwendung eines Systems nach einem der Ansprüche 1 bis 14 zum Orten einer tragbaren Markierung (230, 231; 330, 331), eines Objektes (240, 241) oder einer Person.

## Revendications

1. Système pour déterminer l'emplacement d'une étiquette portative (230, 231 ; 330, 331) dans une zone distincte (205 ; 305) comprenant :
au moins un premier émetteur à ultrasons basé sur un réseau (210 ; 310), dans lequel ledit émetteur à ultrasons basé sur un réseau est configuré pour diriger un faisceau dans un plan de réseau et émettre des données vers deux ou plusieurs secteurs distincts (220 - 224 ; 320) à l'intérieur de ladite zone (205 ; 305), dans lequel les données émises vers chaque secteur consistent en un code d'identification de secteur ;
une étiquette portative (230, 231 ; 330, 331) comprenant (i) un émetteur à fréquence radio configuré pour émettre un signal de fréquence radio et (ii) un récepteur à ultrasons configuré pour recevoir un code d'identification de secteur en provenance dudit premier émetteur à ultrasons basé sur un réseau et pour déterminer une intensité de signal reçu ;
un récepteur de fréquence radio configuré pour communiquer avec l'émetteur de fréquence radio via ledit signal de fréquence radio ; et
un processeur en communication avec le premier émetteur à ultrasons basé sur un réseau et le récepteur de fréquence radio, dans lequel le processeur est configuré pour déterminer l'emplacement de l'étiquette portative à l'intérieur desdits deux ou plusieurs secteurs distincts en se basant sur des informations émises en provenance de l'émetteur de fréquence radio sur l'étiquette portative via ledit signal de fréquence radio à destination du récepteur de fréquence radio, dans lequel le système est configuré pour utiliser l'intensité de signal reçu pour déterminer que les données de secteur le plus fort sont reçues et pour déterminer de ce fait le secteur dans lequel l'étiquette portative est située.

2. Système selon la revendication 1, dans lequel ledit premier émetteur à ultrasons basé sur un réseau (210 ; 310) est configuré pour émettre des signaux à ultrasons vers cinq secteurs distincts ou plus (220 - 224 ; 320) à l'intérieur de ladite zone (205 ; 305).

3. Système selon la revendication 1, comprenant en outre au moins un deuxième émetteur à ultrasons basé sur un réseau (311) à l'intérieur de ladite zone (305), ledit deuxième émetteur à ultrasons basé sur un réseau étant configuré pour émettre des signaux à ultrasons vers deux secteurs distincts ou plus (320) à l'intérieur de ladite zone.

4. Système selon la revendication 3, dans lequel ledit deuxième émetteur à ultrasons basé sur un réseau (311) est configuré pour émettre des signaux à ultrasons vers cinq secteurs distincts ou plus (320) à l'intérieur de ladite zone (305).

5. Système selon la revendication 3 ou 4, dans lequel les émetteurs à ultrasons basés sur un réseau (310, 311) sont positionnés à des emplacements différents à l'intérieur de ladite zone (305) de sorte que les faisceaux émis par les émetteurs à ultrasons basés sur un réseau se croisent à un certain angle.

6. Système selon l'une quelconque des revendications 3 à 5, dans lequel ledit deuxième émetteur à ultrasons basé sur un réseau (311) est agencé pour émettre des signaux à ultrasons sur un axe qui est approximativement perpendiculaire audit premier émetteur à ultrasons basé sur un réseau (310) de sorte que lesdits premier et deuxième émetteurs basés sur un réseau établissent un axe des x et un axe des y.

7. Système selon la revendication 1, dans lequel ladite zone distincte (205 ; 305) a une partie supérieure et ledit émetteur à ultrasons basé sur un réseau (210 ; 310) est positionné sur ladite partie supérieure de ladite zone distincte.

8. Système selon l'une quelconque des revendications 1 à 7, dans lequel le système est configuré pour déterminer l'emplacement de l'étiquette portative (230, 231 ; 330, 331) sans utiliser d'évaluation de retard temporel.

9. Système selon l'une quelconque des revendications 1 à 8, comprenant un moyen pour diriger des faisceaux d'ultrasons provenant au moins du premier émetteur à ultrasons basé sur un réseau (210 ; 310) par des retards relatifs entre les signaux d'émission de chaque élément (105 ; 405 ; 505) dans le réseau.

10. Système selon l'une quelconque des revendications 1 à 9, dans lequel au moins le premier émetteur à ultrasons basé sur un réseau (210 ; 310) comprend un réseau bidimensionnel d'émetteurs à ultrasons.

11. Système selon l'une quelconque des revendications 1 à 10, dans lequel ladite zone distincte (205 ; 305) correspond à une pièce dans un bâtiment.

12. Système selon l'une quelconque des revendications 1 à 11, dans lequel au moins ledit premier émetteur à ultrasons basé sur un réseau (210 ; 310) est configuré pour permettre la détection dans une zone (205 ; 305) de moins d'environ 1 m².

13. Système selon l'une quelconque des revendications 1 à 12, dans lequel le premier émetteur à ultrasons basé sur un réseau (210 ; 310) est configuré pour faire sortir des faisceaux à ultrasons qui se chevauchent à un certain angle, et dans lequel le système est configuré pour établir plusieurs mesures d'amplitude de faisceaux à des angles légèrement différents et pour utiliser une interpolation pour déterminer l'angle avec une précision qui est meilleure que l'espacement entre les faisceaux.

14. Système selon l'une quelconque des revendications 1 à 13, comprenant en outre une pluralité d'étiquettes portatives (230, 231 ; 330, 331), chacune desdites étiquettes portatives associées à un code d'identification unique et dans lequel ledit code d'identification unique est transmissible par un émetteur de fréquence radio respectif de chaque étiquette portative en tant que partie d'un signal de fréquence radio.

15. Utilisation d'un système selon l'une quelconque des revendications 1 à 14 pour localiser une étiquette portative (230, 231 ; 330, 331), un objet (240, 241) ou une personne.
